# EUROPEAN PATENT SPECIFICATION

(11) **EP 0 619 833 B1**
(45) Date of publication and mention of the grant of the patent: **12.07.1995**
(21) Application number: 93902827.0
(22) Date of filing: 30.12.1992
(51) Int. Cl.: C08G 63/84, C08G 63/85, C08G 63/08

(54) **RARE EARTH METAL COORDINATION COMPOUNDS AS LACTONE POLYMERIZATION CATALYSTS**
KOORDINATIONSVERBINDUNGEN VON SELTENERDMETALLEN ALS KATALYSATOREN FUER DIE POLYMERISATION VON LACTONEN
COMPOSES DE COORDINATION DE METAUX DE TERRE RARE UTILISES COMME CATALYSEURS DE POLYMERISATION DE LACTONE

(30) Priority: 30.12.1991 US 814135
(43) Date of publication of application: 19.10.1994
(73) Proprietor: E.I. DU PONT DE NEMOURS AND COMPANY, Wilmington Delaware 19898 (US)
(72) Inventor: FORD, Thomas, Michael, Greenville, DE 19807 (US); McLAIN, Stephan, James, Willmington, DE 19803 (US)
(74) Representative: Woodcraft, David Charles
(86) International application number: PCT/US92/11309
(87) International publication number: WO 93/13155

(56) References cited:
- WO-A-91/05001
- WO-A-91/16368
- US-A- 4 853 459
- Polymer Bulletin, vol. 14, no. 6, December 1985, (Berlin, DE), H.R. KRICHELDORF et al.: "Polylactones. 6. Influence of various metal salts on the optical purity of poly(L-lactide), pages 497-502, see whole document
- Chemical Abstracts, vol. 116, no. 24, June 1992, (Columbus, Ohio, US), Y.TAKEMOTO et al.: "Living polymerization of lactones catalyzed by lanthanide compounds", see abstract no. 236207n, & KIDORUI, 1991, 18, 152-3, see abstract

## Description

### BACKGROUND OF THE INVENTION

### 1. Field of the Invention:

The present invention relates to the polymerization of lactide (either S or R) using a scandium, yttrium or lanthanide series rare earth metal based catalyst.

### 2. Description of the Related Art:

Lactides are presently polymerized to high molecular weight plastics using tin, titanium, zinc and other metal based catalysts by ring opening polymerization of the cyclic ester: 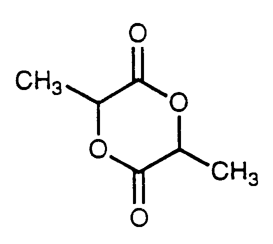
The resulting polymers of lactide are useful in medical applications such as wound closure devices, orthopedic implants, controlled release drug carriers, as well as degradable paper coatings and plastic packaging films.

A. J. Nijenhuis et al., disclosed lactide could be polymerized using Sn(acetylacetonate)₂ and substituted Zn(II) acetylacetonate complexes as catalyst. They claimed the very high crystallinity polymer was produced because the polymerization rate was lower than the crystallization rate, thus allowing polymerization directly onto the p-lactide crystal (Polymer Bull. (1991), 25, pp. 71-77).

U.S. Patent 4,853,459 discloses ring-opening polymerization of cyclic carbonates at 200-350°C using coordination compounds of lanthanides such as Cerium tris(acetylacetonate).

Shen, Z.; Sun, J. and Wu, L., Huaxue Xuebao, 48(7), pp. 686-689 (1990), disclose solution polymerization of DL-lactide using a mixture of aluminum alkyls, rare earth compounds, and water.

U.S. Patent 5,028,667 discloses the polymerization of various lactones including lactide using yttrium and lanthanide series rare earth based catalysts.

### SUMMARY OF THE INVENTION

The present process relates to a process for the polymerization of lactide and optionally up to 20 mole % based on lactide of one or more lactones selected from 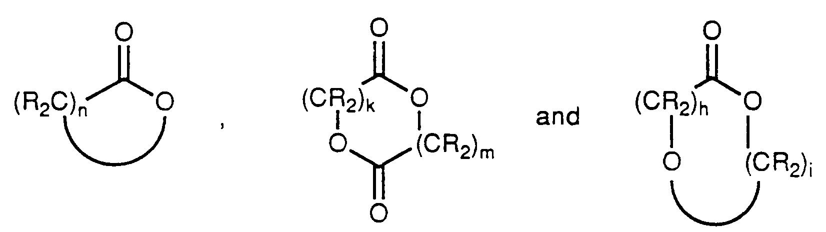
by contacting lactide and the optional lactone with one or more catalysts having the formula MZ₃, wherein n is 4 or 5, h, i, k, and m are independently l or 2, each R is independently selected from hydrogen or hydrocarbyl containing up to 20 carbon atoms or substituted hydrocarbyl containing up to 20 carbon atoms, M is chosen from scandium, yttrium, or a lanthanide series rare earth metal, and Z can be the same or different and are selected from the group of highly coordinating ligands consisting of beta-diketonates such as 2,2,6,6-tetramethylheptan-3,5-dionate and acetylacetonate, fluoride, chloride, bromide, iodide, carboxylate, tetrasubstituted porphyrinato (-2), phthalcyanato (-2), beta-ketoester anions such as methylacetoacetate, dialkylmalonate anion, cyclopentadienide, pentamethylcyclopentadienide, and aryloxide such as phenoxide, and preferably at least one of the Z groups is selected from beta-diketonates, beta-ketoesters and malonate anions. The compound MZ₃ may also be coordinated with one or more neutral ligands.

### DESCRIPTION OF THE PREFERRED EMBODIMENTS

The present invention relates to a process for the ring opening polymerization of lactide, preferably molten, and up to 20 mole % based on lactide of another lactone using as catalysts certain compounds of scandium, yttrium or lanthanide series rare earth metal. The polymerization may also be carried out in solution.

The lactones which can used as comonomers in the process of the present invention include: 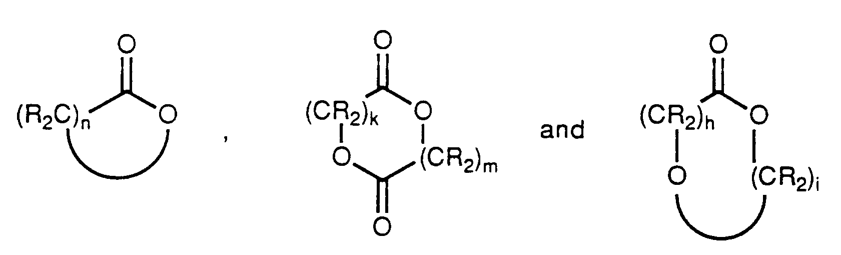
wherein n is 4 or 5, h, i, k, and m are independently 1 or 2 and each R is independently chosen from H or hydrocarbyl containing up to 12 carbon atoms. Preferred lactones are those in which R is hydrogen or methyl, and especially preferred lactones are e-caprolactone, d-valerolactone, glycolide (1,4-dioxan-2,5-dione), 1,5-dioxepan-2-one and 1,4-dioxan-2-one.

The catalysts for this polymerization are compounds of scandium, yttrium and the rare earth metals. Rare earth metals include those elements with atomic numbers 57 to 71, namely lanthanum, cerium, praseodymium, neodymium, promethium, samarium, europium, gadolinium, terbium, dysprosium, holmium, erbium, thulium, ytterbium, and lutetium. Preferred metals are lanthanum, cerium, praseodymium, and neodymium. In all of the catalysts the metal is trivalent. The catalyst preferably is at least slightly soluble in the molten lactide or lactone mixture, or the solution of lactide.

Whereas lactide can be polymerized according to U.S. Patent 5,028,667, some of the catalysts disclosed therein were found subsequently not to be stable at the temperatures used for melt polymerization of lactide. Those catalysts of U.S. 5,028,667, bearing up to two highly coordinating ligands such as 1,3-diketonate ligands such as 2,2,6,6-tetramethylheptan-3,5-dionate and acetylacetonate, fluoride, chloride, bromide, iodide, carboxylate, tetrasubstituted porphyrinato (-2), phthalcyanato (-2), beta-ketoester anions such as methylacetoacetate, dialkylmalonate anion, cyclopentadienide, pentamethylcyclopentadienide, and aryloxide such as phenoxide stabilized the complex, allowing high yields of polylactides via melt polymerization.

Quite surprisingly, it has now been found that transferable alkoxide groups are not necessary for catalytic activity in lactide polymerizations. Thus, complexes of scandium, yttrium, bismuth and the rare earth metals where all the ligands are highly coordinating ligands (such as those cited immediately above) are not only quite active as catalysts for high yield and rapid lactide polymerizations, but they have the following added important features:
1. They are easily synthesized from inexpensive metal salts
2. They are air and moisture stable
3. They give lower color in the produced polymers
The catalyst used herein, MZ₃, may also have included in it neutral molecules, herein termed "neutral ligands". These can be considered to be similar to "solvating ligands", such as hydrates of simple inorganic compounds. The number of neutral ligands per molecule of MZ₃ may range from an average of less than one neutral ligand per MZ₃ molecule to many (about as high as 6) neutral ligands per MZ₃ molecule. The number of neutral ligand molecules per molecule of MZ₃ will depend on the particular MZ₃ and neutral ligand chosen, as well as the method of preparation of the MZ₃-neutral ligand compound. Catalysts which have neutral ligands often have the advantage of being more soluble in molten lactide, solutions of lactide, or common organic solvents (which may be used to conveniently add MZ₃ to molten lactide), which thus allows addition of relatively concentrated catalyst streams to a polymerization, particularly a continuous polymerization. Catalysts containing neutral ligand(s) can be made and isolated, and then used, or can be made in solution (which is usually then used directly in the polymerization) by dissolving MZ₃ (without neutral ligand) in a solution of a neutral ligand in a solvent. Preparation and use of catalysts containing neutral ligands is demonstrated in the Examples.

Suitable neutral ligands include, but are not limited to, water, amines (including heterocyclic amines), alcohols (including polyols such as diols), ethers, esters, phosphates, phosphine oxides, and amine oxides. Examples of such compounds include, but are not limited to water, diethylene glycol diethyl ether, 2-methoxyethanol, 4-(dimethylamino)pyridine, 1,2-hexanediol, 2-ethyl-1-hexanol, butyl lactate, 2,2'-bipyridine, tributyl phosphate, triphenylphosphine oxide, or pyridine-N-oxide.

It is to be further appreciated that many of the compounds that are catalysts often do not exist in simple monomeric form, but are more highly coordinated and exist as "cluster compounds" or as "nonstoichiometric compounds". A review of yttrium and rare earth chemistry applicable to catalysts of the present invention is R. C. Mehotra, P. N. Kapoor, and J. M. Batwara, Coordination Chemical Reviews, Vol. 31, (1980), pp. 67-91. It is understood that even if such compounds do not exist as simple MZ₃ species, such compounds where the metal is trivalent are included within the meaning of active catalysts, and are included in the meaning of structure MZ₃ in this specification. An example of such a cluster compound is Nd₄(OH)₂(acetylacetonate)₁₀ in F. Hart, Comprehensive Coordination Chemistry, Vol. 3, pp. 1077-1081.

It will also be understood by those skilled in the art that if more than one type of Z group is present in a catalyst or mixture of two catalysts containing different Z groups is used, "redistribution" reactions may take place. By redistribution reactions is meant exchange of Z groups between metal atoms, so that it is possible, in theory, to obtain any combination of Z groups present on any particular metal atom.

By hydrocarbyl is meant any monovalent radical that contains only carbon and hydrogen. By substituted hydrocarbyl is meant any monovalent hydrocarbyl radical that contains other functional groups that do not substantially interfere with the reaction or react with any of the reactants or products. Suitable functional groups include halo, ester, ether, amino, thioether, silyl, hydroxy, carbon-carbon unsaturation (i.e., double or triple bonds) and aldehyde. Trivalent scandium, yttrium, bismuth and rare earth compounds will not be usable if they contain a functional group whose pKa is less than that of the pKa of the conjugate acid of the functional group bonded to the metal. A special case may arise where the two pKas are approximately equal. Then, an equilibrium may exist as to which group is bound to the metal, and if such groups fit the definition of Z above, then both will initiate polymerization.

The polymerization of the present invention is carried out in solution, or in the absence of any solvent in the molten lactide or lactide mixture at from 0 to 220°C, preferably from 100 to 200°C and most preferably from 165 to 180°C.

It is preferred to use a dry inert gas such as nitrogen or argon to blanket the reaction. Moisture is deleterious to the activity of the catalyst due to hydration, and can limit the molecular weight of the polymer produced. The starting materials should be dry. Drying methods are known to those skilled in the art, and include distillation from calcium hydride, passage over activated molecular sieves, or crystallization.

Preferred catalysts are those wherein at least one ligand Z is a 1,3,-diketonate, beta diketonate, betaketoester or malonate ion. Even more preferred are those catalysts wherein all three ligands Z are a 1,3-diketonate, beta diketonate, betaketoester or malonate ion. The particularly preferred catalysts are materials where all three of the ligands are 1,3-diketonate, and where the metal is lanthanum. An example of this class is lanthanum tris(2,2,6,6-tetramethylheptan-3,5-dionate): 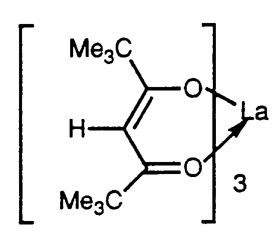
Also preferred are catalysts that contain neutral ligands.

The advantages of the process of the present invention are that it is fast, provides a product with better thermal stability as determined by weight loss at 200°C and involves fewer side reactions as observed by color formation than many of the highly active catalysts in the literature. It has advantages over previous yttrium and rare earth based processes in that the catalysts are less expensive to produce, are more stable to moisture and give even lower levels of color in polylactides and lactide copolymers.

Several of the catalysts utilized in the process of the present invention are new materials. General experimental procedures for the preparation of these compounds is described as follows:
All preparations were done under an atmosphere of dry nitrogen or argon, either in a drybox or in Schlenk type glassware. Tetrahydrofuran (THF) was dried by distillation from sodium benzophenone ketyl. Toluene was dried by distillation from metallic sodium under argon. Acetone was sparged with argon and dried over activated 4A molecular sieves. Commercial lanthanum isopropoxide (Strem Chemicals) was purified by dissolving in dry toluene, filtering the solution to remove insolubles, and then removing the toluene in vacuo to give a white solid which was dried under high vacuum at room temperature. Acetylacetone was distilled under nitrogen. Solvents and liquid reagents were stored over activated 4A molecular sieves in a drybox. ¹H NMR spectra were recorded at 300 MHz and are reported in ppm downfield of Me₄Si.

Lanthanum isopropoxide was used as a starting material in several of the preparations. The lanthanide isopropoxides were originally reported to have the stoichiometry La(OCHMe₂)₃ by K. S. Mazdiyasni, C. T. Lynch, and J. S. Smith, Inorg. Chem., Vol. 5, (1966), pp. 342-346, and L. M. Brown and K. S. Mazdiyasni, Inorg. Chem., Vol. 9, (1970), pp. 2783-2786. Reactions of the lanthanide isopropoxides with ligands such as acetylactone and beta-ketoesters were portrayed as reactions of tris alkoxides to give tris ligand complexes by B. S. Sankhla and R. N. Kapoor, Aust. J. Chem., Vol. 20 (1967), pp. 685-688 and S. N. Misra, T. N. Misra, and R. C. Mehrotra, Indian J. Chem., Vol. 5, (1967), pp. 372-374, as follows:

La(OCHMe₂)₃ + 3 LH → LaL₃ + 3 HOCHMe₂

A recent X-ray crystal structure by O. Poncelet et al., Inorg. Chem., Vol. 28, (1989), pp. 263-267 shows that the true stoichiometry of yttrium isopropoxide is Y₅(O)(OCHMe₂)₁₃. Based upon elemental analysis, O. Poncelet and L. G. Hubert-Pflazgraf, Polyhedron, Vol. 8 (1989), pp. 2183-2188, concluded that neodymium isopropoxide is also an oxo alkoxide, but with the stoichiometry Nd₆O₅(OCHMe₂)₈. Thus it appears that the stoichiometries and structures of the lanthanum isopropoxides may vary across the lanthanide series. Although yttrium is not a member of the lanthanide series, it occurs naturally with the lanthanides and has chemical properties similar to the heavier lanthanides. Two recent reports of reactions with acetylacetone reported by O. Poncelet et al., Polyhedron, Vol. 8, (1989), pp. 2183-2188, and Polyhedron, Vol. 9 (1990), pp. 1305-1310, establish that different metal isopropoxides may give different products. Both of the products were characterized by X-ray crystallography, as:

Y₅(O)(OCHMe₂)₁₃ + CH₃C(O)CH₂C(O)CH₃ → [Y(acac)₂(OC(O)CH₃)]₂ Nd₆0₅(0CHMe₂)₈ + CH₃C(O)CH₂C(O)CH₃ → Nd₄(0H)₂(acac)₁₀

where acac is the acetylacetonate ligand.

In the catalyst syntheses given below, the products of lanthanum isopropoxide plus acetylacetone or beta-ketoesters are depicted as simple tris-ligand complexes, but it is understood that this may not be their true stoichiometries.

Simple tris ligand complexes of beta-diketones, Ln(beta-diketonate)₃ are well known, and are usually prepared from LnCl₃ or Ln(NO₃)₃. These compounds have been reviewed by F. Hart, Comprehensive Coordination Chemistry, Vol. 3, pp. 1077-1081.

### EXAMPLE 1

### Preparation of La[CH₃C(O)CHC(O)OCMe₃]₃ Lanthanum tris (t-butyl-acetoacetate)

Tert-Butylacetoacetate (7.267 g) was added dropwise to a stirring solution of lanthanum isopropoxide (5.225 g) in 100 ml of toluene over a period of 45 min. At the end of the addition, the mixture was stirred an additional 15 min, and then refluxed in an open flask in the drybox for 15 min. About half of the toluene evaporated. The remainder of the toluene was removed on a rotary evaporator, and the resulting solid was recrystallized from minimal pentane at -20°C. The first crop of white solid had a complex ¹H NMR spectrum. The pentane filtrates from this recrystallization were concentrated to give a solid which was tested for lactide polymerization. ¹H NMR (C₆D₆): 1.44 (s, 9H, -OCMe₃); 2.0 (s, 3H, CH₃C(O)-); 5.10, 5.13 (s, s, 1H, -C(O)CHC(O)-).

### EXAMPLE 2

### Preparation of anhydrous Lanthanum tris(acetylacetonate)

Acetylacetone (3 ml) was added dropwise to a solution of lanthanum isopropoxide (0.80 g) in 4 ml of toluene. A white precipitate began to form partway through the addition. Additional toluene was added (4 ml) and the mixture was stirred overnight. The solvent was removed in vacuo and the residue was extracted with acetone. Filtration gave 0.363 g of acetone insoluble solid. The acetone filtrate was concentrated to a pale yellow oil. The oil was extracted with pentane. The pentane solution was filtered and the pentane was removed in vacuo to give a light yellow solid (0.771 g) which was tested for polymerization activity.

### EXAMPLE 3

### Preparation of La[Me₃CC(O)CHC(O)CMe₃]₂(2-ethylhexanoate)

2-Ethylhexanoic acid (0.209 g) dissolved in 1 ml of toluene was added dropwise to a stirring suspension of La[Me₃C(O)CHC(O)CMe₃]₃ in 50 ml of toluene. By the end of the addition, the mixture was homogeneous. After stirring for 10 hours, the solvent was removed in vacuo. The product was partially dissolved by the addition of 5.5 ml of toluene. This mixture was filtered through a medium fritted glass filter to remove 0.182 g of white solid. The filtrate was concentrated to give a thick yellow oil (0.739 g). The ¹H NMR spectrum of this material suggests that it might be a mixture of compounds but it does not appear to contain any of the La starting material. ¹H NMR(C₆D₆): 0.5-2.5 (multiple peaks including two sharp -CMe₃ peaks at about 1.25, 50H); 2.62 (m, lH, -CHCO₂-); 5.89, 5.91 (s, s, 2H, -C(O)CHC(O)-).

### EXAMPLE 4

### Preparation of La[MeC(O)CHC(O)Me](2-ethylhexanoate)₂

2-Ethylhexanoic acid (0.907 ml, 1 equivalent/La) was added to a stirring suspension of commercial lanthanum acetylacetonate (Strem Chemical, 2.0 g). The mixture was heated to reflux for 5 minutes and there was still undissolved solid remaining. The addition and heating sequence was repeated with a second equivalent of acid. The mixture was filtered through a fine fritted glass filter to remove 0.085 g of insoluble material. The solvent was removed in vacuo and the resulting solid was dried at high vacuum/room temperature for 4 hours. The product was recrystallized from minimal pentane at -30°C to give a white solid. Concentrated solutions of this compound have high viscosity and are fiber-forming.

### EXAMPLE 5

### Preparation of La[MeC(O)CHC(O)Me]₂(2-ethylbutyrate)

2-Ethylbutyric acid (0.533 g, 1 equivalent/La) was added dropwise to a stirring suspension of 2.00 g of commercial lanthanum acetylacetonate (Strem Chemicals). The mixture was stirred for 12 hours and then filtered through a fine fritted glass filter to remove 1.147 g of insoluble solid. The filtrate was concentrated in vacuo to give 0.800 g of solid. This material was fractionated by extraction with pentane and filtration to give a pentane insoluble solid (0.207 g). The pentane filtrates were concentrated in vacuo to give a light yellow solid (0.312 g). Both fractions were tested for polymerization activity. The ¹H NMR spectra of the two fractions were complex and dificult to interpret. The pentane insoluble fraction had integrals consistent with the product stoichiometry as written, the pentane soluble fraction did not. ¹H NMR (pentane insoluble fraction, C₆D₆): 1.10 (broad singlet, 5.4H, (CH₃CH₂)₂CH-); 1.4-2.5 (m with large peaks at 1.94, 1.97, 17.8H, (CH₃CH₂)₂CH-, CH₃C(O)-); 5.2-5.6 (m, 1.9H, -C(O)CHC(O)-). (pentane soluble fraction, C₆D₆): 0.8-1.3 (m, 4.7H, (CH₃CH₂)₂CH-); 1.5-2.2 (m with large peaks at 1.91, 1.96, 1.99, 17.6H, (CH₃CH₂)₂CH-, CH₃C(O)-); 5.2-5.4 (m, 2.7H, -C(O)CHC(O)-).

### EXAMPLE 6

### (Preparation of La[MeC(O)CHC(O)Me]₃(H₂O)₃

Commercial lanthanum acetylacetonate (Strem Chemicals) was recrystallized from 60% EtOH/water with a small amount of acetylacetone according to the procedure of G. W. Pope et al., J. Inorg. Nucl. Chem., Vol. 20, (1961), pp. 304-313. This material is insoluble in toluene and moderately soluble in THF. A small portion of the material did not dissolve in THF, so solutions used for polymerizations were filtered through 0.5 mm PTFE syringe filters to remove insoluble material.

### EXAMPLE 7

### Preparation of La[MeC(O)CHC(O)Me]₃(H₂O)ₓ (x less than 1)

Commercial lanthanum acetylacetonate (Strem Chemical) was recrystallized from refluxing 100% EtOH. The crystals were dried for 10 hours at room temperature under high vacuum. This procedure is similar to the one for preparing "anhydrous" rare earth acetylacetonates reported by M. F. Richardson et al., Inorg. Chem., Vol. 7, (1968), pp. 2495-2500. The product is insoluble in toluene and moderately soluble in THF. A small portion of the material did not dissolve in THF, so solutions used for polymerizations were filtered through 0.5 mm PTFE syringe filters to remove insoluble material.

### EXAMPLE 8

### Properties of Lanthanum tris (2,2,6,6-tetramethylheptane dionate)

Commercial material (Strem Chemicals) has the expected simple ¹H NMR spectrum (C₆D₆) with sharp peaks at 1.244 (-CMe₃) and 5.893 (-C(O)CHC(O)-). There is also a small impurity peak at 5.840. The commercial material can be purified by sublimation at 200°C in high vacuum with a typical recovery of 94%. After sublimation the NMR shifts are 1.264 and 5.909. Lanthanide complexes of this diketone ligand have been shown to form hydrates by J. S. Ghotra et al., Chem. Soc., Chemical Communications, (1973), pp. 113-114. The change in the NMR spectrum is attributed to dehydration that occurs when the hydrated commercial material is sublimed. The solubility of the sublimed complex in toluene is 17 mg/ml. Solubility in THF is considerably higher, and solubility in toluene containing 3% THF by volume is more than 10X greater than toluene alone.

### EXAMPLE 9

### Preparation of Tris (tert-Butylhydroxymethylene-d,l-camphorato) lanthanum

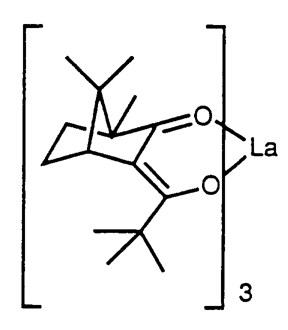

The beta-diketone ligand was prepared by the reaction of racemic camphor with NaH and methyl trimethylacetate in dimethoxyethane using the general procedure reported by H. L. Goering et al., J. Am. Chem. Soc., Vol. 96, (1974), p. 1493. The crude product was purified by Kugelrohr distillation at high vacuum. The desired fraction was collected at 60-80°C. It was further purified according to the copper chelate procedure for purification of beta-diketones by M. D. McCreary et al., J. Am. Chem. Soc., Vol. 96, (1974), pp. 1038-1054. The lanthanum complex was prepared by reaction of the ligand with LaCl₃(H₂O)₇ and NaOMe in MeOH according to the M. D. McCreary reference. (This paper reports the preparation of Tris[tert-Butylhydroxymethylene-d-camphorato]europium). The lanthanum complex as prepared had high solubility in pentane. After drying at 100°C at high vacuum for several hours, its solubility in pentane and toluene decreased. High solubility could be restored by addition of a few % THF to the solution. ¹H NMR (After drying, C₆D₆): 0.81 (s, 3H, Me); 0.95 (s, 3H, Me); 1.11 (s, 3H, Me); 1.32 (s, 9H, -CMe₃); 1.59 (bs, 3H, -CH₂CH₂-); 1.96 (s, 1H, -CH₂CH₂-); 2.84 (s, 1H, bridgehead CH).

### EXAMPLE 10

### Preparation of Lanthanum tris (2,2,6-trimethyloctan-3,5-dionate)

(±)-2,2,6-trimethyloctan-3,5-dione ligand was prepared by the reaction of pinacolone with NaH and racemic methyl-2-methylbutyrate in dimethoxyethane using the general procedure reported by H. L. Goerig et al., J. Am. Chem. Soc., Vol. 96, (1974), p. 1493. The synthesis of stereochemically pure (+)-(S)-2,2,6-trimethyloctan-3,5-dione and its Eu complex have been reported by D. Seebach et al., Liebigs Ann. Chem., (1976), pp. 1357-1369.

A solution of LaCl₃(H₂0)₇ (5.0 g) in 50 ml of MeOH was added to a solution of (±)-2,2,6-trimethyloctan-3,5-dione (7.39 g) and NaOMe (2.17 g) in 290 ml of MeOH. The mixture became cloudy and was stirred for 2 hours. The mixture was filtered to remove insolubles, and an equal volume of water was added to the MeOH filtrate. This caused precipitation of the product, however the mixture could not be readily filtered so the bulk of the MeOH was removed in vacuo on a rotary evaporator. The product separated from the aqueous mixture as a yellow oil. The mixture was extracted with 4 X 200 ml of hexane. The combined hexane extracts were dried over MgSO₄ and concentrated to give 1.46 g of crude product as a yellow oil. Sublimation at 200°C/high vacuum gave 0.678 g of waxy yellow solid. The product is highly soluble in organic solvents, being practically miscible with pentane. ¹H NMR (C₆D₆): 0.99 (t, 3H,-CH₂CH₃); 1.24 (s, 12H, -CMe₃ and -CH(Me)-); 1.44 (m, lH, -CH_{A}H_{B}CH₃); 1.80 (m, lH, -CH_{A}H_{B}CH₃); 2.30 (bs, lH, -CH(Me)CH₂CH₃); 5.67 (s, lH, -C(C))CHC(O)-).

### EXAMPLE 11

### Polymerization using Lanthanum tris (2,2,6,6-tetramethylheptane dionate) catalyst

5 g L-lactide, polymer grade, is melted in a flame-dried, nitrogen-flushed glass test tube suspended in a 110°C vapor bath. 70 microliters of 0.25 M tetrahydrofuran solution of the catalyst is injected via hypodermic syringe to give a monomer to catalyst molar ratio of 2000/1. The clear, colorless mixture exhibits no flow behavior after 5 minutes. After an additional 3 minutes the tube is quenched in ice water to stop the reaction. Monomer conversion as measured by thermogravimetric analysis is 83%.

### EXAMPLE 12

### Polymerization using Lanthanum tris (2,2,6,6-tetramethylheptane dionate) catalyst

5 g L-lactide, polymer grade, is melted in a flame-dried, nitrogen-flushed glass test tube suspended in a 165°C vapor bath. Immediately upon melting, 70 microliters of 0.25 M toluene solution of the catalyst is injected via hypodermic syringe to give a monomer to catalyst molar ratio of 2000/1. The clear, pale yellow mixture exhibits no flow behavior after 1 minute. After an additional 1 minute a sample is quenched in cold water to stop the reaction. Monomer conversion as measured by thermogravimetric analysis is 95%.

### EXAMPLE 13

### Polymerization using Lanthanum tris (2,2,6,6-tetramethylheptane dionate) catalyst

5 g L-lactide, polymer grade, is melted in a flame-dried, nitrogen-flushed glass test tube suspended in a 165°C vapor bath. After 5 minutes at 165°C, a stream of Argon is introduced at the bottom of the tube to enhance mixing while 70 microliters of a 0.25 M toluene solution of the catalyst is injected via hypodermic syringe to give a monomer to catalyst molar ratio of 2000/1. The clear, colorless mixture exhibits no flow behavior after 20 seconds. After an additional 10 seconds a sample is quenched in cold water to stop the reaction. Monomer conversion as measured by thermogravimetric analysis is 91%.

### EXAMPLE 14

### Polymerization using Lanthanum tris (2,2,6,6-tetramethylheptane dionate) catalyst

5 g L-lactide, polymer grade, is melted in a flame-dried, nitrogen-flushed glass test tube suspended in a 165°C vapor bath. After 5 minutes at 165°C, a stream of Argon is introduced at the bottom of the tube to enhance mixing while 17.5 microliters of a 0.25 M toluene solution of the catalyst is injected via hypodermic syringe to give a monomer to catalyst molar ratio of 8000/1. The clear, colorless mixture becomes viscous almost immediately, and after 1 minute a sample is quenched in cold water to stop the reaction. Monomer conversion as measured by the thermogravimetric analysis is 66%.

### EXAMPLE 15

### Polymerization using tris [tert-Butylhydroxymethylene-d,l-camphorato]lanthanum catalyst

5 g L-lactide, polymer grade, is melted in a flame-dried, nitrogen-flushed glass test tube suspended in a 165°C vapor bath. After 5 minutes at 165°C, a stream of Argon is introduced at the bottom of the tube to enhance mixing while 70 microliters of a 0.25 M toluene solution of the catalyst is injected via hypodermic syringe to give a monomer to catalyst molar ratio of 2000/1. The clear, colorless mixture becomes viscous and pale yellow immediately, and after 15 seconds a sample is quenched in cold water to stop the reaction. Monomer conversion as measured by thermogravimetric analysis is 91%.

### EXAMPLE 16

### Polymerization using anhydrous Lanthanum tris (acetylacetonate) catalyst

5 g L-lactide, polymer grade, is melted in a flame-dried, nitrogen-flushed glass test tube suspended in a 165°C vapor bath. After 5 minutes at 165°C, 70 microliters of a 0.25 M toluene solution of the catalyst is injected via hypodermic syringe to give a monomer to catalyst molar ratio of 2000/1. The clear, colorless mixture becomes viscous and pale yellow immediately, and after 35 seconds a sample is quenched in cold water to stop the reaction. Monomer conversion as measured by thermogravimetric analysis is 90%.

### EXAMPLE 17

### Polymerization using anhydrous Lanthanum tris (acetylacetonate) catalyst

5 g L-lactide, polymer grade, is melted in a flame-dried, nitrogen-flushed glass test tube suspended in a 110°C vapor bath. After 5 minutes at 110°C, 70 microliters of a 0.25 M toluene solution of the catalyst is injected via hypodermic syringe to give a monomer to catalyst molar ratio of 2000/1. The clear, colorless mixture becomes viscous after 3 minutes, and after a total of 7 minutes a sample is quenched in cold water to stop the reaction. Monomer conversion as measured by thermogravimetric analysis is 48%.

### EXAMPLE 18

### Polymerization using Lanthanum bis (2,2,6,6-tetramethylheptane dionate) (2-ethylhexanoate) catalyst

5 g L-lactide, polymer grade, is melted in a flame-dried, nitrogen-flushed glass test tube suspended in a 165°C vapor bath. After 5 minutes at 165°C, 70 microliters of a 0.25 M toluene solution of the catalyst is injected via hypodermic syringe to give a monomer to catalyst molar ratio of 2000/1. The clear, colorless mixture becomes viscous after 1 minute, and after a total of 5 minutes a sample is quenched in cold water to stop the reaction. Monomer conversion as measured by thermogravimetric analysis is 90%.

### EXAMPLE 19

### Polymerization using Lanthanum tris (2,2,6-trimethyloctan-3,5-dionate) catalvst

5 g L-lactide, polymer grade, is melted in a flame-dried, nitrogen-flushed glass test tube suspended in a 165°C vapor bath. After 5 minutes at 165°C, 70 microliters of a 0.25 M toluene solution of the catalyst is injected via hypodermic syringe to give a monomer to catalyst molar ratio of 2000/1. The clear, yellow mixture exhibits no flow after 45 seconds, and after an additional 15 seconds a sample is quenched in cold water to stop the reaction. Monomer conversion as measured by thermogravimetric analysis is 95%.

### EXAMPLE 20

### Polymerization using Scandium tris (2,2,6,6-tetramethylheptane dionate) catalyst

5 g L-lactide, polymer grade, is melted in a flame-dried, nitrogen-flushed glass test tube suspended in a 165°C vapor bath. 175 microliters of a 0.1 M toluene solution of the catalyst is injected via hypodermic syringe to give a monomer to catalyst molar ratio of 2000/1. The mixture becomes viscous after 10 minutes and exhibits no flow behavior after 20 minutes. After a total of 25 minutes a small sample is quenched in ice water to stop the reaction. Monomer conversion as measured by thermogravimetric analysis is 79%.

### EXAMPLE 21

### Polymerization using Lanthanum tris (t-butylacetoacetate) catalyst

5 g L-lactide, polymer grade, is melted in a flame-dried, nitrogen-flushed glass test tube suspended in a 165°C vapor bath. 35 microliters of a 0.5 M toluene solution of the catalyst is injected via hypodermic syringe to give a monomer to catalyst molar ratio of 2000/1. The mixture becomes viscous after 1 minute, and after a total of 2 minutes a small sample is quenched in ice water to stop the reaction. Monomer conversion as measured by thermogravimetric analysis is 64%.

### EXAMPLE 22

### Polymerization using Yttrium tris (acetylacetonate) catalyst

5 g L-lactide, polymer grade, is melted in a flame-dried, nitrogen-flushed glass test tube suspended in a 165°C vapor bath. 6.7 mg of the catalyst is added to give a monomer to catalyst molar ratio of 2000/1. The clear yellow mixture is viscous after 20 minutes, and after an additional 25 minutes a small sample is quenched in ice water to stop the reaction. Monomer conversion as measured by thermogravimetric analysis is 55%.

### EXAMPLE 23

### Polymerization using Yttrium tris (2,2,6,6-tetramethylheptane dionate) catalyst

5 g L-lactide, polymer grade, is melted in a flame-dried, nitrogen-flushed glass test tube suspended in a 165°C vapor bath. 35 microliters of a 0.5 M toluene solution of the catalyst is injected via hypodermic syringe to give a monomer to catalyst molar ratio of 2000/1. The clear colorless mixture is viscous after 2 minutes, and after a total of 6 minutes a small sample is quenched in ice water to stop the reaction. Monomer conversion as measured by the thermogravimetric analysis is 84%.

### EXAMPLE 24

### Polymerization using Tris(d,d-dicampholylmethanato)Europium catalyst

5 g L-lactide, polymer grade, is melted in a flame-dried, nitrogen-flushed glass test tube suspended in a 165°C vapor bath. 175 microliters of a 0.1 M toluene solution of the catalyst is injected via hypodermic syringe to give a monomer to catalyst molar ratio of 2000/1. The cloudy yellow mixture becomes clear after 30 seconds, viscous after 1 minute, and after a total of 4 minutes a small sample is quenched in ice water to stop the reaction. Monomer conversion as measured by thermogravimetric analysis is 87%.

### EXAMPLE 25

### Polymerization using Yttrium octoate catalyst

5 g L-lactide, polymer grade, is melted in a flame-dried, nitrogen-flushed glass test tube suspended in a 165°C vapor bath. 9 mg of the catalyst is added to give a monomer to catalyst molar ratio of 2000/1. The catalyst does not dissolve, and after a total of 29 minutes no reaction had occurred.

### EXAMPLE 26

### Polymerization using Cerium tris(trifluoroacetyl acetonate) catalyst

5 g L-lactide, polymer grade, is melted in a flame-dried, nitrogen-flushed glass test tube suspended in a 165°C vapor bath. 175 microliters of a 0.1 M toluene solution of the catalyst is injected via hypodermic syringe to give a monomer to catalyst molar ratio of 2000/1. The clear mixture becomes viscous after 30 minutes, and after a total of 60 minutes a small sample is quenched in ice water to stop the reaction. Monomer conversion as measured by thermogravimetric analysis is 80%.

### EXAMPLE 27

### Polymerization using Scandium tris(hexafluoroacac) catalyst

5 g L-lactide, polymer grade, is melted in a flame-dried, nitrogen-flushed glass test tube suspended in a 165°C vapor bath. 175 microliters of a 0.1 M toluene solution of the catalyst is injected via hypodermic syringe to give a monomer to catalyst molar ratio of 2000/1. The clear mixture becomes viscous after 18 minutes, and after a total of 30 minutes a small sample is quenched in ice water to stop the reaction. Monomer conversion as measured by thermogravimetric analysis is 42%.

### EXAMPLE 28

### Polymerization using Praseodynium tris(hexafluoroacac) catalyst

5 g L-lactide, polymer grade, is melted in a flame-dried, nitrogen-flushed glass test tube suspended in a 165°C vapor bath. 175 microliters of a 0.1 M toluene solution of the catalyst is injected via hypodermic syringe to give a monomer to catalyst molar ratio of 2000/1. After a total of 10 minutes a small sample is quenched in ice water to stop the reaction. Monomer conversion as measured by thermogravimetric analysis is 14%.

### EXAMPLE 29

### Polymerization using La(acac)₃(H₂0)ₓ (x less than 1) catalyst

5 g L-lactide, polymer grade, is melted in a flame-dried, nitrogen-flushed glass test tube suspended in a 165°C vapor bath. 87 microliters of a 0.2 M THF solution of the catalyst is injected via hypodermic syringe to give a monomer to catalyst molar ratio of 2000/1. The clear mixture becomes viscous after 60 seconds, and after a total of 5 minutes a small sample is quenched in ice water to stop the reaction. Monomer conversion as measured by thermogravimetric analysis is 82%.

### EXAMPLE 30

### Polymerization using Lanthanum tris(acac)·3H₂0 catalyst

5 g L-lactide, polymer grade, is melted in a flame-dried, nitrogen-flushed glass test tube suspended in a 165°C vapor bath. 87 microliters of a 0.2 M THF solution of the catalyst is injected via hypodermic syringe to give a monomer to catalyst molar ratio of 2000/1. The clear mixture becomes viscous after 15 minutes, and a small sample is quenched in ice water to stop the reaction. Monomer conversion as measured by thermogravimetric analysis is 34%.

### EXAMPLE 31

### Polymerization using anhydrous Lanthanum tris(acac) catalyst

5 g L-lactide, polymer grade, is melted in a flame-dried, nitrogen-flushed glass test tube suspended in a 165°C vapor bath. 87 microliters of a 0.2 M THF solution of the catalyst is injected via hypodermic syringe to give a monomer to catalyst molar ratio of 2000/1. The clear mixture becomes viscous after 15 seconds, and after a total of 35 seconds a small sample is quenched in ice water to stop the reaction. Monomer conversion as measured by thermogravimetric analysis is 90%.

### EXAMPLE 32

### Polymerization using La[Me₃CC(O)CHC(O)CMe₃]₂(2-ethylhexanoate) catalyst

5 g L-lactide, polymer grade, is melted in a flame-dried, nitrogen-flushed glass test tube suspended in a 165°C vapor bath. 58 microliters of a 0.3 M toluene solution of the catalyst is injected via hypodermic syringe to give a monomer to catalyst molar ratio of 2000/1. The catalyst precipitates immediately, but redissolves after 45 seconds. The clear mixture becomes viscous after 1.5 minutes, and after a total of 5 minutes a small sample is quenched in ice water to stop the reaction. Monomer conversion as measured by thermogravimetric analysis is 76%.

### EXAMPLE 33

### Polymerization using La[MeC(O)CHC(O)Me](2-ethylhexanoate)₂ catalyst

5 g L-lactide, polymer grade, is melted in a flame-dried, nitrogen-flushed glass test tube suspended in a 165°C vapor bath. 175 microliters of a 0.1 M toluene solution of the catalyst is injected via hypodermic syringe to give a monomer to catalyst molar ratio of 2000/1. The catalyst precipitates immediately to give a cloudy solution, but redissolves after 14 minutes. The clear mixture becomes only slightly viscous after 20 minutes, when a small sample is quenched in ice water to stop the reaction. Monomer conversion as measured by thermogravimetric analysis is 32%.

### EXAMPLE 34

### Polymerization using La[MeC(O)CHC(O)Me]₂(2-ethylbutyrate) catalyst

5 g L-lactide, polymer grade, is melted in a flame-dried, nitrogen-flushed glass test tube suspended in a 165°C vapor bath. 175 microliters of a 0.1 M toluene solution of the catalyst is injected via hypodermic syringe to give a monomer to catalyst molar ratio of 2000/1. The yellow mixture becomes viscous after 30 seconds, and after a total of 2 minutes a small sample is quenched in ice water to stop the reaction. Monomer conversion as measured by thermogravimetric analysis is 92%.

### EXAMPLE 35

### Solution polymerization of lactide at room temperature using Lanthanum tris(2,2,6,6-tetramethyl-3,5-heptane dionate)

4.0 g L-lactide and 0.956 g La catalyst (molar ratio of 20/1) were combined in 100 ml chloroform and stirred at room temperature for 8 days. The reaction was monitored by periodically removing samples, evacuating to remove the chloroform, and recording an ¹H NMR spectrum in 1/1 CDCl₃/C₆D₆. The relative integrals of the quartet due to the -CH(Me)- signal of the monomer (4.03 ppm) vs. the polymer (5.05 ppm) was used to determine conversion. (Table). The polymer was isolated by adding the reaction mixture to excess methanol. The precipitated polymer was filtered and dried in vacuo to give 2.96 g (74%).

**TABLE**

| Time (h) | Conversion (%) |
|---|---|
| 16 | 6 |
| 88 | 48 |
| 136 | 76 |
| 184 | 89 |

### EXAMPLE 36

### Solution polymerization of lactide at room temperature using Lanthanum tris(2,2,6,6-tetramethyl-3,5-heptane dionate)

2.0 g L-lactide and 0.048 g La catalyst (molar ratio of 200/1) were combined in 10 ml methylene chloride and stirred at room temperature for 4 days. The polymer was isolated by adding the reaction mixture to excess methanol. The precipitated polymer was filtered and dried in vacuo to give 1.20 g (60%). GPC in THF vs. polystyrene standards gave Mn=25,400 and Mw=55,300.

### EXAMPLE 37

### Solution polymerization of lactide at room temperature using Lanthanum tris(2,2,6,6-tetramethyl-3,5-heptane dionate)

10.0 g L-lactide and 0.024 g La catalyst (molar ratio of 2000/1) were combined in 100 ml methylene chloride and stirred at room temperature for 20 days. The polymer was isolated by diluting the highly viscous mixture with enough methylene chloride to make a pourable solution, and then adding the mixture to excess methanol in a blender. The precipitated polymer was filtered and dried in vacuo to give 7.39 g (74%). GPC in chloroform vs. polystyrene standards gave Mn=235,000 and Mw=556,000. Intrinsic viscosity in chloroform at 30°C is 3.76 dl/g.

### EXAMPLE 38

### Solution polymerization of lactide at room temperature using anhydrous Lanthanum tris(acetylacetonate)

2.0 g L-lactide and 0.030 g La catalyst (molar ratio of 200/1) were combined in 10 ml methylene chloride and stirred at room temperature for 8 days. The polymer was isolated by adding the reaction mixture to excess methanol. The precipitated polymer was filtered and dried in vacuo to give 0.67 g (34%).

### EXAMPLE 39

### Solution polymerization of lactide at room temperature using Lanthanum tris(acetylacetonate)(H₂O)ₓ (x≦1)

2.0 g L-lactide and 0.030 g La catalyst (molar ratio of 200/1) were combined in 10 ml methylene chloride and stirred at room temperature for 8 days. The polymer was isolated by adding the reaction mixture to excess methanol. The precipitated polymer was filtered and dried in vacuo to give 0.28 g (14%).

### EXAMPLE 40

### Solution polymerization of lactide at room temperature using Lanthanum tris(2,2,6,-tetramethyl-3,5-octane dionate)

2.0 g L-lactide and 0.048 g La catalyst (molar ratio of 200/1) were combined in 10 ml methylene chloride and stirred at room temperature for 4 days. The polymer was isolated by adding the reaction mixture to excess methanol. The precipitated polymer was filtered and dried in vacuo to give 0.86 g (43%). GPC in THF vs. polystyrene standards gave Mn=20,000 and Mw=41,700.

### EXAMPLE 41

### Solution polymerization of lactide at room temperature using Lanthanum tris(2,2,6,6-tetramethyl-3,5-heptane dionate)(diethylene glycol dibutyl ether)

2.0 g L-lactide and 0.063 g La catalyst (molar ratio of 200/1) were combined in 10 ml methylene chloride and stirred at room temperature. After 1 day, the highly viscous solution was diluted with methylene chloride to a total volume of 100 ml. After a total of 4 days, polymer was isolated by adding the reaction mixture to excess methanol. The precipitated polymer was filtered and dried in vacuo to give 1.15 g (58%). DSC showed a melting endotherm at 173°C (44.4 J/g).

### EXAMPLE 42

### Solution polymerization of lactide at room temperature using Lanthanum tris(2,2,6,6-tetramethyl-3,5-heptane dionate)(diethylene glycol dibutyl ether)

1.0 g L-lactide and 0.315 g La catalyst (molar ratio of 20/1) were combined in 5 ml methylene chloride and stirred at room temperature for 4 days. The polymer was isolated by adding the reaction mixture to excess methanol. The precipitated polymer was filtered and dried in vacuo to give 0.82 g (82%). GPC in THF vs. polystyrene standards gave Mn=25,700 and Mw=57,900.

### EXAMPLE 43

### Solution polymerization of lactide at room temperature using Lanthanum tris(2,2,6,6-tetramethyl-3,5-heptane dionate) and 2-methoxyethanol

2.0 g L-lactide, 0.048 g La catalyst, and 0.0052 ml 2-ethoxyethanol (molar ratio of 200/1/1) were combined in 10 ml methylene chloride and stirred at room temperature for 4 days. The polymer was isolated by adding the reaction mixture to excess methanol. The precipitated polymer was filtered and dried in vacuo to give 1.83 g (92%). GPC in THF vs. polystyrene standards gave Mn=27,400 and Mw=47,800.

### EXAMPLE 44

### Solution polymerization of lactide at room temperature using Lanthanum tris (2,2,6,6-tetramethyl-3,5-heptane dionate) and 4-dimethylaminopyridine

4.0 g L-lactide, 0.096 g La catalyst, and 0.017 g 4-dimethylaminopyridine (molar ratio of 200/1/1) were combined in 20 ml methylene chloride and stirred at room temperature. The polymer was isolated by adding the reaction mixture to excess methanol. The precipitated polymer was filtered and dried in vacuo to give 3.26 g (82%). GPC in THF vs. polystyrene standards gave Mn=87,700 and Mw=270,000.

### EXAMPLE 45

### Synthesis of Lanthanum tris(2,2,6,6-tetramethyl-3,5-heptane dionate)(diethylene glycol dibutyl ether)

Diethylene glycol dibutyl ether (0.602 g) was added to a stirring suspension of 2.0 g lanthanum tris(2,2,6,6-tetramethyl-3,5-heptane dionate) in 30 ml of dry pentane (0.95 eq ether per La). There was an immediate reaction, and all but a small amount of the suspended La complex went into solution. After 15 min, the mixture was filtered through a medium glass frit, and the pentane was removed from the filtrate in vacuo to give a white crystalline solid. The isolated solid redissolved readily in pentane to give a clear solution. DSC (sealed pan loaded in the dry box): broad melting endotherm with a maximum at 60°C (35J/g).

### EXAMPLE 46

### Polymerization of lactide at 166°C using Lanthanum tris(2,2,6,6-tetramethyl-3,5-heptane dionate)(diethylene glycol dibutyl ether)

5 g L-lactide, polymer grade, was melted in a flame-dried, nitrogen-flushed glass test tube suspended in a 166°C vapor bath. 58 microliters of a 0.2 M toluene solution of the catalyst was injected via hypodermic syringe to give a monomer to catalyst molar ratio of 3000/1. The yellow mixture becomes viscous after 15 seconds, and after a total of 2 minutes a small sample was quenched in ice water to stop the reaction. Monomer conversion as measured by thermogravimetric analysis was 94%.

### EXAMPLE 47

### Synthesis of Lanthanum tris(2,2,6,6-tetramethyl-3,5-heptane dionate)(1,2-hexanediol)

A solution of 0.118 g diol was added to a stirring suspension of 0.689 g lanthanum tris(2,2,6,6-tetramethyl-3,5-heptane dionate) in 30 ml of dry pentane (molar ratio = 1/1). There was an immediate reaction, and most of the suspended La complex went into solution. After 1 h, 0.5 ml THF was added to the mixture to give a homogeneous solution. The solvent was removed in vacuo to give a waxy white solid. This solid was redissolved in 50 ml of pentane and the pentane was removed in vacuo to give a dry white solid. DSC (sealed pan loaded in the dry box): sharp melting endotherm at 150°C (81J/g).

### EXAMPLE 48

### Polymerization of lactide at 140°C using Lanthanum tris(2,2,6,6-tetramethyl-3,5-heptane dionate)(1,2-hexanediol)

5 g L-lactide, polymer grade, was melted in a flame-dried, nitrogen-flushed glass test tube suspended in a 140°C vapor bath. 29 microliters of a 0.4 M THF solution of the catalyst was injected via hypodermic syringe to give a monomer to catalyst molar ratio of 3000/1. The yellow mixture becomes viscous after 30 seconds, and after a total of 2 minutes a small sample was quenched in ice water to stop the reaction. Monomer conversion as measured by thermogravimetric analysis was 96%. GPC in THF vs. polystyrene standards gave Mn=86,000 and Mw=191,000.

### EXAMPLE 49

### Synthesis of Lanthanum tris(2,2,6,6-tetramethyl-3,5-heptane dionate)(diethylene glycol diethyl ether)

Diethylene glycol diethyl ether (0.236 g) dissolved in 2 ml pentane was added to a stirring suspension of 0.5 g lanthanum tris(2,2,6,6-tetramethyl-3,5-heptane dionate) in 6 ml of dry pentane (2.0 eq ether per La). There was an immediate reaction to give a homogeneous solution, and after a few minutes, the pentane was removed in vacuo to give a white sticky solid. The sample was redissolved in 2.0 ml pentane, and the solution was cooled to -40°C to give large colorless crystals. Upon filtration and drying in vacuo, the crystals collapsed to a fine white powder. ¹H NMR in C₆D₆: 1.078(t, J=7.0 Hz), -CH₂CH₃); 1.290 (s, CMe₃); 3.422 (t, J=4.6 Hz, -CH₂CH₂-); 3.569 (q, J=7.0 Hz, -CH₂CH₃); 3.886(q, J=4.6 Hz, -CH₂CH₂-); 5.860( s, -C(O)CHC(O)-). Integration shows this to be the 1:1 complex. DSC (sealed pan loaded in the dry box): sharp melting endotherm at 75°C (41J/g).

### EXAMPLE 50

### Polymerization of lactide at 166°C using Lanthanum tris(2,2,6,6-tetramethyl-3,5-heptane dionate)(diethylene glycol diethyl ether)

5 g L-lactide, polymer grade, was melted in a flame-dried, nitrogen-flushed glass test tube suspended in a 166°C vapor bath. 26 microliters of a 0.4 M THF solution of the catalyst was injected via hypodermic syringe to give a monomer to catalyst molar ratio of 3300/1. The yellow mixture becomes viscous after 30 seconds, and after a total of 4 minutes a small sample was quenched in ice water to stop the reaction. Monomer conversion as measured by thermogravimetric analysis was 88%.

### EXAMPLE 51

### Synthesis of a liquid adduct of Lanthanum tris(2,2,6,6-tetramethyl-3,5-heptane dionate) with 2-ethyl-1-hexanol

2-ethyl-1-hexanol (0.669 g) was added to 1.04 g of solid lanthanum tris(2,2,6,6-tetramethyl-3,5-heptane dionate) and stirred to give a moderately viscous homogeneous liquid. (3.4 eq alcohol/La).

### EXAMPLE 52

### Polymerization of lactide at 166°C using the liquid adduct of Lanthanum tris(2,2,6,6-tetramethyl-3,5-heptane dionate) with 2-ethyl-1-hexanol

5 g L-lactide, polymer grade, was melted in a flame-dried, nitrogen-flushed glass test tube suspended in a 166°C vapor bath. 35 microliters of a 0.5 M THF solution of the catalyst was injected via hypodermic syringe to give a monomer to catalyst molar ratio of 2000/1. The yellow mixture becomes viscous after 15 seconds, and after a total of 1 minute a small sample was quenched in ice water to stop the reaction. Monomer conversion as measured by thermogravimetric analysis was 92%. GPC in THF vs. polystyrene standards gave Mn=55,000.

### EXAMPLE 53

### Synthesis of adducts of Lanthanum tris(2,2,6,6-tetramethyl-3,5-heptane dionate) with butyl lactate

Combined 0.213 g of solid lanthanum tris(2,2,6,6-tetramethyl-3,5-heptane dionate) with 0.102 ml butyl lactate (2.2 eq butyl lactate/La) and 0.5 ml pentane to give a homogeneous solution. The pentane was removed in vacuo to give a slightly viscous liquid which crystallized slowly over a period of several months. Toluene solutions of lanthanum tris(2,2,6,6-tetramethyl-3,5-heptane dionate) with 2-10 equivalents of butyl lactate were prepared for catalyst testing.

### EXAMPLE 54

### Polymerization of lactide at 140°C using the adducts of Lanthanum tris(2,2,6,6-tetramethyl-3,5-heptane dionate) with butyl lactate

5 g L-lactide, polymer grade, was melted in a flame-dried, nitrogen-flushed glass test tube suspended in a 140°C vapor bath. 46 microliters of a 0.25 M Toluene solution of the catalyst containing 2.1 equivalents of butyl lactate was injected via hypodermic syringe to give a monomer to catalyst molar ratio of 3000/1. The yellow mixture becomes viscous after 45 seconds, and after a total of 2 minutes a small sample was quenched in ice water to stop the reaction. GPC in THF vs. polystyrene standards gave Mn=67,000 Mw=169,000. Similar results were obtained when 5 and 10. equivalents of butyl lactate were employed, giving conversions after 2 minutes at 140°C of 93 and 96%, respectively.

### EXAMPLE 55

### Formation of adducts of Lanthanum tris(2,2,6,6-tetramethyl-3,5-heptane dionate) with 4-dimethylaminopyridine, 2,2'-bipyridine, tributyl phosphate, triphenylphosphine oxide, and pyridine-N-oxide

4-dimethylaminopyridine, 2,2'-bipyridine, and tributyl phosphate were all found to solubilize lanthanum tris(2,2,6,6-tetramethyl-3,5-heptane dionate) in pentane, thus providing evidence of adduct formation. This simple test could not be performed with triphenylphospine oxide and pyridine-N-oxide because of their low solubility in pentane. Solutions of the 1:1 adducts of all of the ligands were prepared in THF for catalyst testing.

### EXAMPLE 56

### Polymerization of lactide at 166°C using the adducts of Lanthanum tris(2,2,6,6-tetramethyl-3,5-heptane dionate) with 4-dimethylaminopyridine, 2,2'-bipyridine, tributyl phosphate, triphenylphosphine oxide, and pyridine-N-oxide

5 g L-lactide, polymer grade, was melted in flame-dried, nitrogen-flushed glass test tubes suspended in a 166°C vapor bath. 46 microliters of a 0.25 M Toluene solutions of the catalyst adducts were injected via hypodermic syringe to give monomer to catalyst molar ratios of 3000/1. The yellow mixtures became viscous after between and 15 and 45 seconds, depending on the catalyst, and after a total of 2 minutes small samples were quenched in ice water to stop the reaction. In all cases, TGA conversion was observed to be between 92 and 97%, except in the case where 4-dimethylaminopyridine was used. This additive substantially retarded the polymerization, which was measured by TGA to be 81% after 6 minutes of heating at 165°C.

## Claims

1. A process for polymerizing lactide comprising: contacting at 100°C to 220°C a lactide and optionally up to 20 mole percent of another lactone selected from the group consisting of: 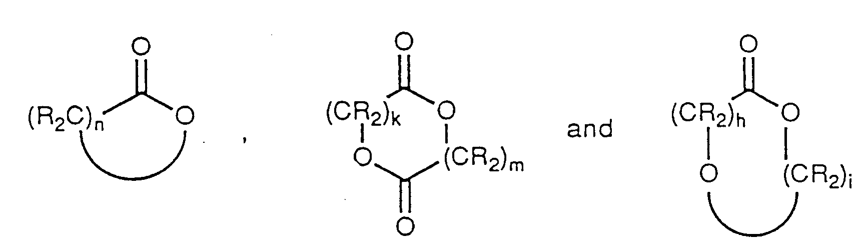 and mixtures thereof, where n is 4 or 5, h, i, k and m are independently 1 or 2, each R is independently selected from H, hydrocarbyl radicals containing up to 12 carbon atoms or substituted hydrocarbyl radicals containing up to 12 carbon atoms, with a catalytic amount of a catalyst of the formula MZ₃, wherein M is a metal selected from the group consisting of scandium, yttrium and lanthanide series rare earth metals and the Zs are independently the same or different highly coordinating ligands selected from the group consisting of beta-diketonates such as 2,2,6,6-tetramethylheptan-3,5-dionate and acetyl-acetonate, fluoride, chloride, bromide, iodide, carboxylate, tetrasubstituted porphyrinato (-2), phthalcyanato (-2), beta-ketoester anions such as methylacetoacetate, dialkylmalonate anion, cyclopentadienide, pentamethylcyclopentadienide, and aryloxide such as phenoxide, wherein MZ may also be coordinated with one or more neutral ligands and cooling the resulting polymer.

2. The process of Claim 1 wherein the R in the lactone comonomer is H or CH₃.

3. The process of Claim 2 wherein at least one Z is a betadiketone, betaketoester or malonate anion.

4. The process of Claim 2 wherein all three Zs are a betaketone, betaketoester or malonate anion.

5. The process of Claim 4 wherein the polymerization is carried out in the melt and a lactide homopolymer is being prepared.

6. The process of Claim 5 wherein the metal M is lanthanum, cerium, praseodymium, neodymium, or mixtures thereof.

7. The process of Claim 4 wherein all three Zs are a betadiketone anion.

8. The process of Claim 7 wherein the polymerization is carried out in the melt and a lactide hompolymer is being prepared.

9. The process of Claim 8 wherein the metal M is lanthanum, cerium, praseodymium, neodymium, or mixtures thereof.

10. The process of Claim 7 wherein all three Zs are 2,2,6,6-tetramethyl-3,5,-heptanedionate.

11. The process of Claim 10 wherein the polymerization is carried out in the melt and a lactide homopolymer is being prepared.

12. The process of Claim 11 wherein the metal M is lanthanum, cerium, praseodymium, neodymium, or mixtures thereof.

13. The process of Claim 12 wherein the metal M is lanthanum.

14. The process of Claim 4 wherein MZ₃ is lanthanum tris (t-butylacetoacetate).

15. The process of Claim 4 wherein MZ₃ is lanthanum tris (acetylacetonate).

16. The process of Claim 1 wherein MZ₃ is coordinated with one or more neutral ligands.

17. The process of Claim 5 wherein MZ₃ is coordinated with one or more neutral ligands.

18. The process of Claim 16 wherein the neutral ligand is selected from the group consisting of water, amines, alcohols, ethers, esters, phosphates, phosphine oxides, and amine oxides.

19. The process of Claim 17 wherein the neutral ligand is selected from the group consisting of water, amines, alcohols, ethers, esters, phosphates, phosphine oxides, and amine oxides

## Patentansprüche

1. Verfahren zum Polymerisieren von Lactid, umfassend: in-Kontakt-Bringen eines Lactids und gegebenenfalls bis zu 20 Mol-Prozent eines anderen Lactons, das aus der Gruppe ausgewählt ist, die aus 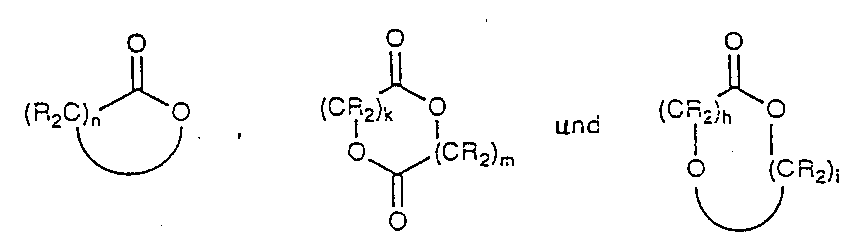 und Gemischen davon besteht, wobei n 4 oder 5 ist, h, i, k und m unabhängig 1 oder 2 sind, jedes R unabhängig aus H, Kohlenwasserstoffresten mit bis zu 12 Kohlenstoffatomen oder substituierten Kohlenwasserstoffresten mit bis zu 12 Kohlenstoffatomen ausgewählt ist, mit einer katalytischen Menge eines Katalysators der Formel MZ₃, worin M ein Metall ist, das aus der Gruppe ausgewählt ist, die aus Scandium, Yttrium und Seltenerdmetallen der Lanthanidenreihe besteht, und die Liganden Z unabhängig die gleichen oder verschiedene hoch koordinierende Liganden sind, die aus der Gruppe ausgewählt sind, die aus β-Diketonaten, wie 2,2,6,6-Tetramethylheptan-3,5-dionat und Acetylacetonat, Fluorid, Chlorid, Bromid, Iodid, Carboxylat, tetrasubstituiertem Porphyrinato(-2), Phthalcyanato(-2), β-Ketoester-Anionen, wie Methylacetoacetat, Dialkylmalonat-Anion, Cyclopentadienid, Pentamethylcyclopentadienid und Aryloxid, wie Phenoxid, besteht, wobei MZ₃ auch mit einem oder mehreren neutralen Liganden koordiniert sein kann, sowie Kühlen des resultierenden Polymers.

2. Verfahren gemäß Anspruch 1, wobei R in dem Lacton-Comonomer H oder CH₃ ist.

3. Verfahren gemäß Anspruch 2, wobei wenigstens ein Z ein β-Diketon-, β-Ketoester- oder Malonat-Anion ist.

4. Verfahren gemäß Anspruch 2, wobei alle drei Liganden Z ein β-Diketon-, β-Ketoester- oder Malonat-Anion sind.

5. Verfahren gemäß Anspruch 4, wobei die Polymerisation in der Schmelze durchgeführt wird und ein Lactid-Homopolymer hergestellt wird.

6. Verfahren gemäß Anspruch 5, wobei es sich bei dem Metall M um Lanthan, Cer, Praseodym, Neodym oder Gemische davon handelt.

7. Verfahren gemäß Anspruch 4, wobei alle drei Liganden Z ein β-Diketon-Anion sind.

8. Verfahren gemäß Anspruch 7, wobei die Polymerisation in der Schmelze durchgeführt wird und ein Lactid-Homopolymer hergestellt wird.

9. Verfahren gemäß Anspruch 8, wobei es sich bei dem Metall M um Lanthan, Cer, Praseodym, Neodym oder Gemische davon handelt.

10. Verfahren gemäß Anspruch 7, wobei alle drei Liganden Z 2,2,6,6-Tetramethyl-3,5-heptandionat sind.

11. Verfahren gemäß Anspruch 10, wobei die Polymerisation in der Schmelze durchgeführt wird und ein Lactid-Homopolymer hergestellt wird.

12. Verfahren gemäß Anspruch 11, wobei es sich bei dem Metall M um Lanthan, Cer, Praseodym, Neodym oder Gemische davon handelt.

13. Verfahren gemäß Anspruch 12, wobei es sich bei dem Metall M um Lanthan handelt.

14. Verfahren gemäß Anspruch 4, wobei MZ₃ Lanthantris(t-butylacetoacetat) ist.

15. Verfahren gemäß Anspruch 4, wobei MZ₃ Lanthantris(acetylacetonat) ist.

16. Verfahren gemäß Anspruch 1, wobei MZ₃ mit einem oder mehreren neutralen Liganden koordiniert ist.

17. Verfahren gemäß Anspruch 5, wobei MZ₃ mit einem oder mehreren neutralen Liganden koordiniert ist.

18. Verfahren gemäß Anspruch 16, wobei der neutrale Ligand aus der Gruppe ausgewählt ist, die aus Wasser, Aminen, Alkoholen, Ethern, Estern, Phosphaten, Phosphinoxiden und Aminoxiden besteht.

19. Verfahren gemäß Anspruch 17, wobei der neutrale Ligand aus der Gruppe ausgewählt ist, die aus Wasser, Aminen, Alkoholen, Ethern, Estern, Phosphaten, Phosphinoxiden und Aminoxiden besteht.

## Revendications

1. Procédé pour polymériser un lactide, comprenant : la mise en contact entre 100 °C et 220 °C d'un lactide et, éventuellement, jusqu'à 20 % en moles d'une autre lactone choisie dans le groupe constitué de : 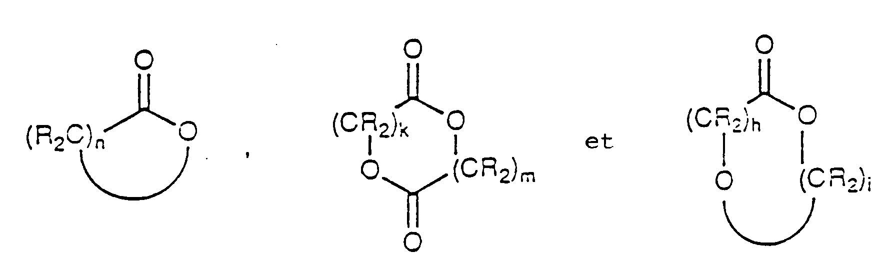 et des mélanges de celles-ci, où n est 4 ou 5, h, i, k et m sont indépendamment 1 ou 2, chaque R est indépendamment choisi parmi H, les radicaux hydrocarbyles contenant jusqu'à 12 atomes de carbone ou les radicaux hydrocarbyles substitués contenant jusqu'à 12 atomes de carbone, avec une quantité catalytique d'un catalyseur de la formule MZ₃, où M est un métal choisi dans le groupe constitué du scandium, de l'yttrium et des métaux des terres rares de la série des lanthanides, et les Z sont indépendamment des ligands hautement coordonnants identiques ou différents choisis dans le groupe constitué des bêta-dicétonates tels que l'heptane-3,5-dionate de 2,2,6,6-tétraméthyle et l'acétonate d'acétyle, des anions fluorure, chlorure, bromure, iodure, carboxylate, porphyrinato (-2), phtalcyanato (-2), bêta-cétoesters tétrasubstitués tels que l'anion acétoacétate de méthyle, malonate de dialkyle, du cyclopentadiénure, du pentaméthylcyclopentadiénure et d'un aryloxyde tel que le phénoxyde, où MZ peut aussi être coordonné avec un ou plusieurs ligands neutres, et le refroidissement du polymère obtenu.

2. Procédé selon la revendication 1, dans lequel le R du comonomère de lactone est H ou CH₃.

3. Procédé selon la revendication 2, dans lequel au moins un Z est un anion bêtadicétone, bêtacétoester ou malonate.

4. Procédé selon la revendication 2, dans lequel les trois Z sont tous un anion bêtacétone, bêtacétoester ou malonate.

5. Procédé selon la revendication 4, dans lequel la polymérisation est effectuée dans la masse fondue et un homopolymère de lactide est prépare.

6. Procédé selon la revendication 5, dans lequel le métal M est le lanthane, le cérium, le praséodyme, le néodyme ou des mélanges de ceux-ci.

7. Procédé selon la revendication 4, dans lequel les trois Z sont tous un anion bêtadicétone.

8. Procédé selon la revendication 7, dans lequel la polymérisation est effectuée dans la masse fondue et un homopolymère de lactide est prépare.

9. Procédé selon la revendication 8, dans lequel le métal M est le lanthane, le cérium, le praséodyme, le néodyme ou des mélanges de ceux-ci.

10. Procédé selon la revendication 7, dans lequel les trois Z sont du 3,5-heptanedionate de 2,2,6,6-tétraméthyle.

11. Procédé selon la revendication 10, dans lequel la polymérisation est effectuée dans la masse fondue et un homopolymère de lactide est prépare.

12. Procédé selon la revendication 11, dans lequel le métal M est le lanthane, le cérium, le praséodyme, le néodyme ou des mélanges de ceux-ci.

13. Procédé selon la revendication 12, dans lequel le métal M est le lanthane.

14. Procédé selon la revendication 4, dans lequel MZ₃ est le tris(t-butylacétoacétate) de lanthane.

15. Procédé selon la revendication 4, dans lequel MZ₃ est le tris(acétylacétonate) de lanthane.

16. Procédé selon la revendication 1, dans lequel MZ₃ est coordonné avec un ou plusieurs ligands neutres.

17. Procédé selon la revendication 5, dans lequel MZ₃ est coordonné avec un ou plusieurs ligands neutres.

18. Procédé selon la revendication 16, dans lequel le ligand neutre est choisi dans le groupe constitué de l'eau, des amines, des alcools, des éthers, des esters, des phosphates, des oxydes de phosphine et des oxydes d'amine.

19. Procédé selon la revendication 17, dans lequel le ligand neutre est choisi dans le groupe constitué de l'eau, des amines, des alcools, des éthers, des esters, des phosphates, des oxydes de phosphine et des oxydes d'amine.
